(19) Europäisches Patentamt

European Patent Office

Office européen des brevets

(11) Veröffentlichungsnummer: **0 296 369 B1**

# (12) EUROPÄISCHE PATENTSCHRIFT

(45) Veröffentlichungstag der Patentschrift: **16.12.92**

(21) Anmeldenummer: **88108376.0**

(22) Anmeldetag: **26.05.88**

(51) Int. Cl.⁵: **B62D 65/00**

(54) **Vorrichtung zum automatischen Fördern von Spannrahmen oder dergleichen in Transferstrassen.**

(30) Priorität: **16.06.87 DE 3720175**

(43) Veröffentlichungstag der Anmeldung:
**28.12.88 Patentblatt 88/52**

(45) Bekanntmachung des Hinweises auf die
Patenterteilung:
**16.12.92 Patentblatt 92/51**

(84) Benannte Vertragsstaaten:
**BE DE ES FR GB IT NL SE**

(56) Entgegenhaltungen:
**DE-A- 2 810 822**
**DE-A- 3 341 169**
**US-A- 4 400 607**
**US-A- 4 494 687**

(73) Patentinhaber: **KUKA Schweissanlagen & Roboter GmbH**
**Blücherstrasse 144**
**W-8900 Augsburg(DE)**

(72) Erfinder: **Pöckl, Franz**
**Illerstrasse 8 a**
**W-8900 Augsburg(DE)**

(74) Vertreter: **Ernicke, Hans-Dieter, Dipl.-Ing. et al**
**Schwibbogenplatz 2b**
**W-8900 Augsburg(DE)**

Rank Xerox (UK) Business Services

EP 0 296 369 B1

## Beschreibung

Die Erfindung bezieht sich auf eine Vorrichtung zum automatischen Fördern von Spannrahmen oder dergleichen Halteeinrichtungen zwischen einer Wartestation und einer Arbeitsstation, insbesondere für das Schweißen von lose zusammengefügten Kraftfahrzeugkarosserien unterschiedlichen Karosserietyps, bei welcher die Spannrahmen in parallel zu einer Transferlinie für das zu bearbeitende Werkstück angeordneten Führungen verschiebbar und im Bereich der Arbeitsstation quer zur Transferlinie aus der Verschiebestellung in eine Arbeitsstellung bewegbar sind, wobei die einzelne Führung sich über zwei Wartestationen mit der dazwischen befindlichen Arbeitsstation erstreckt, und wobei in den beiden Wartestationen beidseits der Transferlinie mindestens je zwei Führungen mit wenigstens drei Spannrahmen für unterschiedliche Werkstücktypen parallel zueinander und ortsfest angeordnet sind, und in der Arbeitsstation an jeder Seite der Transferlinie ein Führungsabschnitt für die Aufnahme eines Spannrahmens quer zur Transferlinie beweglich geführt und in fluchtenden Stellungen mit den Führungen positionierbar ist.

Eine Anlage mit dieser Merkmalskombination ist bekannt durch die DE-A-33 41 169. Hierbei werden die Spannrahmen, im Bereich einer Wartestation an Führungsschienen verschiebbar hängend von einem als Laufkran ausgebildeten Führungsabschnitt übernommen und einer Paternostereinrichtung oder dergleichen zugeführt, von der sie zu einer Schwenkeinrichtung neben dem Werkstück abgesenkt werden, die sie dann in die Arbeitsstellung kippt.

Eine solche Vorrichtung ist jedoch verhältnismäßig aufwendig und setzt einen erheblichen Raumbedarf oberhalb der Transferstrecke sowie eine stabile Gerüstkonstruktion für die Führung der Spannrahmen voraus.

Der Erfindung liegt die Aufgabe zugrunde, bei einer Vorrichtung mit der eingangs genannten Merkmalskombination die Zuführung der Spannrahmen so auszubilden, daß eine einfachere, weniger patzbedürftige Anordnung erreicht werden kann.

Die Lösung dieser Aufgabe wird erfindungsgemäß dadurch erreicht, daß der bewegliche Führungsabschnitt als portalförmiger Aufbau ausgebildet und an dem der Arbeitsstellung zugekehrten Rand einer Verschiebeplattform angeordnet ist. Durch bloßes Verschieben der Plattform, also durch einfache Translation, wird der am werkstückseitigen Rand der Plattform angeordnete Führungsabschnitt als Transportmittel des Spannrahmens von der den einzelnen Wartestationen entsprechenden Verschiebestellung ohne Zwischenschaltung weiterer Einrichtungen bis in die Arbeitsstation bewegt und dient dort zugleich vermöge seines portalartigen Aufbaus auch als Haltemittel für den Spannrahmen. Man erhält so einen erheblich einfacheren, schneller arbeitenden und weniger platzbedürften Aufbau der Anlage.

Es erweist sich als vorteilhaft, daß der bewegliche Führungsabschnitt mit dem Spannrahmen auch in einer Zwischenstellung zwischen der Arbeitsstellung und der nächstgelegenen Führung bewegbar ist, wobei vorgesehen ist, daß die Werkstücke im Takt voranbewegt werden, während sich der bewegliche Führungsabschnitt in der Zwischenstellung befindet. Die Verschiebeplattform kann mindestens einen zur Bearbeitung des Werkstücks bestimmten Industrie-Roboter, vorzugsweise zwei Roboter, aufnehmen. Dies hat zur Folge, daß bei einer Seitwärtsbewegung der Verschiebeplattform nicht nur der einzelne darin geführte Spannrahmen, sondern auch der darauf befindliche Industrie-Roboter aus der Bewegungsbahn des zu bearbeitenden Werkstückes herausbewegt werden, so daß das Werkstück im Takt der nächsten Arbeitsstation zugeführt werden kann.

Im Sinne der Ersparnis von Antriebseinrichtungen sieht die Erfindung vor, daß die Spannrahmen an ihren schmalen Stirnseiten mit Kupplungsteilen versehen sind, die sich bei einer Querbewegung des im beweglichen Führungsabschnitt angeordneten Spannrahmens mit einem in der Wartestation befindlichen Spannrahmen selbsttätig hintergreifen können. Es braucht daher nur ein Spannrahmen für eine seitliche Verschiebebewegung angetrieben zu werden, weil der benachbarte Spannrahmen über die Kupplungselemente in Schlepp genommen werden kann.

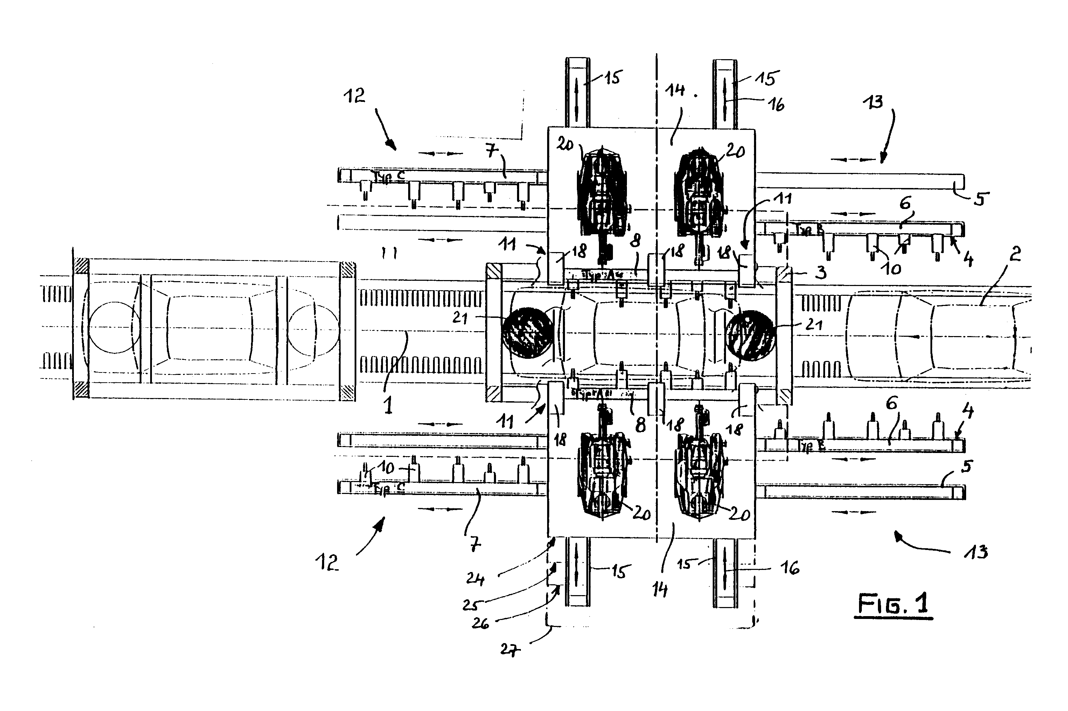

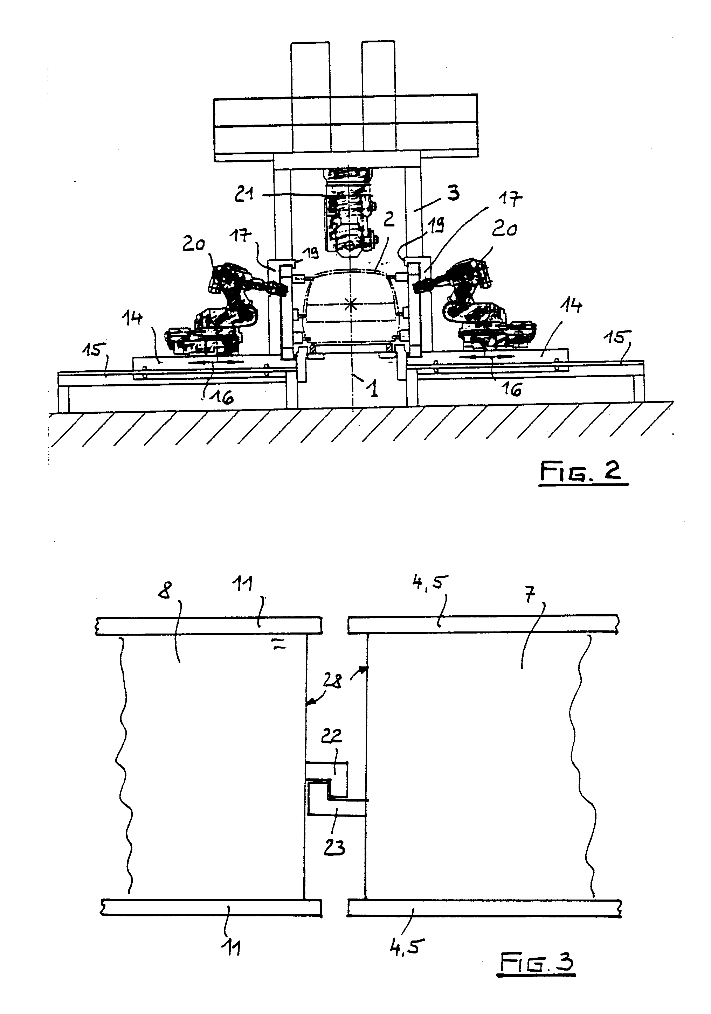

Einzelheiten der Erfindung ergeben sich aus der Zeichnung. In ihr ist die Erfindung schematisch und beispielsweise dargestellt. Es zeigen:

Fig. (1): eine Draufsicht auf eine Arbeitsstation mit daran angrenzenden Wartestationen für beweglich geführte Spannrahmen,

Fig. (2): eine Stirnansicht der Arbeitsstation gem Fig. (1) und

Fig. (3): eine Teilseitenansicht auf miteinander kuppelbare Spannrahmen.

Im Ausführungsbeispiel der Fig. (1) ist eine Transferlinie mit (1) bezeichnet, längs der Werkstücke (2), beispielsweise in Form von Kraftfahrzeugkarosserie-Teilen taktweise voranbewegt werden. In einer Arbeitsstation (3) sollen die Einzelteile dieser Werkstücke (2) in zueinander zentrierter Stellung festgespannt und beim Ausführungsbeispiel miteinander verschweißt werden. Zum Verschweißen sind beim gezeigten Ausführungsbeispiel stehende Industrie-Roboter (20) und hängend angeordnete Industrie-Roboter (21) vorgesehen, ohne daß die Erfindung auf diese Anordnung beschränkt ist.

Mit der Erfindung wird die Bedingung gestellt, daß längs der Transferlinie (1) mehr als zwei unterschiedliche Werkstücktypen bearbeitet werden sollen. Jedem einzelnen Werkzeugtyp ist an jeder Seite der Transferlinie (1) ein Spannrahmen (6,7,8) zugeordnet, wobei die Steuerung der Anlage so aufgebaut ist, daß jeweils für das in der Arbeitsstation (3) befindliche Werkstück (2) der zugehörige Spannrahmen (6,7 oder 8) herangeführt wird.

Beim Ausführungsbeispiel der Fig. (1) sind drei Spannrahmen (6,7,8) an jeder Seite der Transferlinie (1) für die Bearbeitung von drei Werkstücktypen dargestellt. In der Arbeitsstellung (24) befinden sich gerade die Spannrahmen (8) für die Bearbeitung des zugeordneten Werkstückes (2). Die jeweils zwei anderen Spannrahmen (6,7) befinden sich in parallelen Führungen (4,5), die sich längs der Transferlinie (1) erstrecken. Diese Führungen (4,5) bilden die Wartestationen (12,13).

Die genannten Führungen (4,5) sind im Bereich der Arbeitsstation (3) unterbrochen. In diesem Bereich ist je Seite de Transferlinie ein beweglicher Führungsabschnitt (11) vorgesehen, der in Richtung des Pfeiles (16) quer zur Transferlinie (1) verschieblich ist. Dieser bewegliche Führungsabschnitt (11) ist beim Ausführungsbeispiel als portalförmiger Aufbau (17) an einer Verschiebeplattform (14) angeordnet, die an Schienen (15) in der Verschieberichtung (16) beweglich geführt ist. Dieser bewegliche Führungsabschnitt (11) kann den darin aufgenommenen Spannrahmen (8) gegen das Werkstück (2) bewegen, so daß die am Spannrahmen (6,7,8) befindlichen Spannelemente (10) in der Lage sind, das zugeordnete Werkstück (2) aufzunehmen, zu zentrieren und festzuspannen.

In der festegespannten Stellung des Werkstükkes (2) treten die Industrie-Roboter (20,21)in Tätigkeit und verschweißen die Teile des Werkstückes (2), indem beispielsweise der Ausleger des Industrie-Roboters (20) durch Hohlräume des einzelnen Spannrahmens (8) hindurchtritt.

Sobald die Arbeit am Werkstück (2) beendet ist, wird die Verschiebeplattform (14) mit dem beweglichen Führungsabschnitt (11) in eine Zwischenstellung (25) zurückbewegt, wodurch das Werkstück (2) Bewegungsfreiheit erhält, längs der Transferlinie (1) in die nächste Arbeitsstation bewegt zu werden.

Wenn zur Bearbeitung eines anderen Werkstückes (2) ein anderer Spannrahmen (6,7) verwendet werden muß, wird die Verschiebeplattform (14) mit dem beweglichen Führungsabschnitt (11) in die fluchtende Stellung zu einer der beiden Führungen (4,5) gebracht, von wo der benötigte Spannrahmen (6,7) längs der zugeordneten Führung (4,5) herausgezogen und gleichzeitig der vorher benutzte Spannrahmen (8) in die freie Position der Führung (4,5) versetzt wird.

Um diese Bewegung mit wenig Energie herbeizuführen, sieht die Erfindung in Fig. (3) vor, daß benachbarte Stirnseiten (28) der Spannrahmen (6,7,8) mit Kupplungselementen (22,23) versehen sind. Diese Kupplungselemente (22,23) sind so ausgebildet, daß sie sich einwandfrei hintergreifen können, wenn die Verschiebeplattform (14) mit dem darin angeordneten Spannrahmen (8) in die Fluchtung zu einer der Führungen (4,5) gebracht wird. Es empfiehlt sich, einen Antrieb für die Verschiebung dieser Spannrahmen (6,7,8) im Bereich der Verschiebeplattform (14) anzuordnen, wobei dieser Antrieb drehrichtungsumkehrbar und in der Lage ist, jeweils zwei Spannrahmen (6,7,8) gleichzeitig zu bewegen.

Im Beispiel der Fig. (2) ist der portalförmige Aufbau (17) mit den daran angeordneten Führungselementen (19) gezeigt. Dieser portalförmige Aufbau (17) gliedert sich je Verschiebeplattform (14) in drei Führungssäulen (18) auf, welche die Führungselemente (19) aufweisen. Diese Führungssäulen (18) sind an dem der Transferlinie (1) zugekehrten Rand der Verschiebeplattform (14) angeordnet.

Im Beispiel der Fig. (1) sind die verschiedenen Stellungen (24,25,26,27) der Verschiebeplattform (14) symbolisch dargestellt. Sie sollen zeigen, daß die Verschiebeplattform (14) in der Lage ist, den darin aufgenommenen Spannrahmen (8) in die Arbeitsstellung (24) oder in die Zwischenstellung (25) oder in eine mit den Führungen (4,5) fluchtende Führungsstellung (26,27) zu bewegen, wodurch die Möglichkeit gegeben ist, den einen oder anderen Spannrahmen (6,6,7,8) aus der Wartestellung (12,13) in die Arbeitsstellung (24) zu bewegen, ohne einen wesentlichen Platz in Anspruch zu nehmen.

Mit (21) sind hängend angeordnete Industrie-Roboter gezeigt, die von oben her Bearbeitungsmaßnahmen am Werkstück (2) vornehmen können.

## Patentansprüche

1. Vorrichtung zum automatischen Fördern von Spannrahmen (6,7,8) oder dergleichen Halteeinrichtungen zwischen einer Wartestation (12,13) und einer Arbeitsstation (3), insbesondere für das Schweißen von lose zusammengefügten Kraftfahrzeug-Karosserien unterschiedlichen Karosserietyps, bei welcher die Spannrahmen (6,7,8) in parallel zu einer Transferlinie (1) für das zu bearbeitende Werkstück (2) angeordneten Führungen (4,5) verschiebbar und im Bereich der Arbeitsstation (3) quer zur Transferlinie (1) aus der Verschiebestellung (26,27) in eine Arbeitsstellung (24) bewegbar sind, wobei die einzelne Führung (4,5) sich über zwei Wartestationen (12,13) mit der dazwischen befindlichen Arbeitsstation (3) erstreckt, und wobei in den beiden Wartestationen (12,13) beidseits der Transferlinie (1) mindestens je zwei Führungen (4,5) mit wenigstens drei Spannrahmen (6,7,8) für unterschiedliche Werkstücktypen parallel zueinander und ortsfest angeordnet sind, und in der Arbeitstation (3) an jeder Seite der Transferlinie (1) ein Führungsabschnitt (11) für die Aufnahme eines Spannrahmens (6,7 oder 8) quer zur Transferlinie (1) beweglich geführt und in fluchtenden Stellungen mit den Führungen (4,5) positionierbar ist, dadurch **gekennzeichnet,** daß der bewegliche Führungsabschnitt (11) als portalförmiger Aufbau (17) ausgebildet und an dem der Arbeitsstellung (24) zugekehrten Rand einer Verschiebeplattform (14) angeordnet ist.

2. Vorrichtung nach Anspruch 1, dadurch **gekennzeichnet,** daß der bewegliche Führungsabschnitt (11) in einer Zwischenstellung (25) zwischen der Arbeitsstellung (24) und der nächstgelegenen Führung (4) während des Taktvorschubes der Werkstücke (2) positionierbar ist.

3. Vorrichtung nach Anspruch 1, dadurch **gekennzeichnet,** daß der portalförmige Aufbau (17) aus drei Führungssäulen (18) besteht, die an beiden Ecken der Verschiebeplattform (14) und in einer dazwischen befindlichen mittleren Stellung mit zueinander fluchtenden Führungselementen (19) angeordnet sind.

4. Vorrichtung nach Anspruch 1, dadurch **gekennzeichnet,** daß auf der Verschiebeplattform (14) mindestens ein zur Bearbeitung des Werkstückes (2) bestimmter Industrie-Roboter (20) angeordnet ist.

5. Vorrichtung nach Anspruch 1 oder einem der folgenden, dadurch **gekennzeichnet,** daß die Spannrahmen (6,7,8) an ihren schmalen Stirnseiten mit Kupplungsteilen (22,23) versehen sind, die sich bei einer Querbewegung des im beweglichen Führungsabschnitt (11) angeordneten Spannrahmens (8) mit einem in der Wartestation befindlichen Spannrahmen (6,7) selbsttätig hintergreifen können.

## Claims

1. Apparatus for automatically conveying clamping frames (6, 7, 8) or similar holding devices between a waiting station (12, 13) and a workstation (3), in particular for welding detachably joined motor vehicle bodies of different body types, in which the clamping frames (6, 7, 8) are displaceable in guides (4, 5) arranged parallel to a transfer line (1) for the workpiece (2) to be machined and, in the region of the workstation (3), are movable transversely with respect to the transfer line (1) from the displacement position (26, 27) to a work position (24), the individual guide (4, 5) extending over two waiting stations (12, 13) with the workstation (3) located in between, and in the two waiting stations (12, 13) on either side of the transfer line (1) at least two respective guides (4, 5), having at least three clamping frames (6, 7, 8) for different workpiece types, being arranged parallel to one another and in stationary manner, and in the workstation (3) on each side of the transfer line (1) a guide section (11) for receiving a clamping frame (6, 7 or 8) being movably guided transversely with respect to the transfer line (1) and being positionable in positions flush with the guides (4, 5), characterized in that the movable guide section (11) is constructed as a portal-type structure (17) and is arranged on the edge of a displacement platform (14) facing the work position (24).

2. Apparatus according to Claim 1, characterized in that the movable guide section (11) is positionable in an intermediate position (25) between the work position (24) and the nearest guide (4) during the intermittent advance of the workpieces (2).

3. Apparatus according to Claim 1, characterized in that the portal-type structure (17) comprises three guide pillars (18) which are arranged at both corners of the displacement platform (14) and in a central position located in between, with mutually flush guide elements (19).

4. Apparatus according to Claim 1, characterized in that at least one industrial robot (20) intended for machining the workpiece (2) is arranged on the displacement platform (14).

5. Apparatus according to Claim 1 or one of the subsequent claims, characterized in that the clamping frames (6, 7, 8) are provided on their narrow end sides with coupling parts (22, 23) which can latch behind one another automatically on a transverse movement of the clamping frame (8), arranged in the movable guide section (11), with a clamping frame (6, 7) located in the waiting station.

## Revendications

1. Dispositif pour le transport automatique de cadres d'assemblage (6,7,8) ou de dispositifs analogues de retenue entre un poste d'attente (12,13) et un poste de travail (3), notamment pour le soudage de carrosseries de types différents, assemblées de façon lâche, de véhicules automobiles, et dans lequel les cadres d'assemblage (6,7,8) peuvent être translatés dans des guides (4,5) disposés parallèlement à une chaîne transfert (1) pour la pièce à traiter (2) et sont déplaçables transversalement à la chaîne transfert (1), au niveau du poste de travail (3), depuis la position de translation (26,27) dans une position de travail (24), et dans lequel chaque guide (4,5) s'étend sur deux postes d'attente (12,13) entre lesquels est intercalé un poste de travail (3), et dans lequel, dans les deux postes d'attente (12,13), au moins respectivement deux guides (4,5) comportant au moins trois cadres d'assemblage (6,7,8) pour des types différents de pièces à traiter sont disposés parallèlement entre eux et de façon fixe des deux côtés de la chaîne transfert (1), et, dans la position de travail (3), de chaque côté de la chaîne transfert (1) une section de guidage (11) servant à recevoir un cadre d'assemblage (6,7,8) est guidée de manière à être déplaçable transversalement par rapport à la chaîne transfert (1) et peut être positionnée dans des positions alignées avec les guides (4,5), caractérisé par le fait que la section mobile de guidage (11) est agencée sous la forme d'une structure en forme de portique (17) et est disposée sur le bord, tourné vers la position de travail (24), d'une plateforme de translation (14).

2. Dispositif suivant la revendication 1, caractérisé par le fait que la section mobile de guidage (11) peut être positionnée dans une position intermédiaire (25) entre la position de travail (24) et le guide immédiatement suivant (4), pendant l'avance cadencée des pièces à traiter (2).

3. Dispositif suivant la revendication 1, caractérisé par le fait que la structure en forme de portique (17) est constituée de trois colonnes de guidage (18), qui sont disposées aux deux angles de la plate-forme de translation (14) et dans une position médiane intermédiaire, dans laquelle les éléments de guidage (19) sont alignés réciproquement.

4. Dispositif suivant la revendication 1, caractérisé par le fait qu'au moins un robot industriel (20) servant à traiter la pièce à traiter (2) est disposé sur la plate-forme de translation (14).

5. Dispositif suivant la revendication 1 ou l'une des suivantes, caractérisé par le fait que les cadres d'assemblage (6,8) comportent, sur leurs petits côtés frontaux, des pièces d'accouplement (22,23), qui, lors d'un déplacement transversal du cadre d'assemblage (8) disposé dans la section mobile de guidage (11), peuvent s'engager automatiquement derrière un cadre d'assemblage (6,7) situé dans le poste d'attente.

Fig. 1

EP 0 296 369 B1

FIG. 2

FIG. 3